(19) Europäisches Patentamt
European Patent Office
Office européen des brevets

(11) **EP 2 148 965 B1**

(12) **EUROPEAN PATENT SPECIFICATION**

(45) Date of publication and mention
of the grant of the patent:
**19.10.2016 Bulletin 2016/42**

(21) Application number: **08753752.8**

(22) Date of filing: **16.05.2008**

(51) Int Cl.:
***E04F 15/024*** (2006.01)

(86) International application number:
**PCT/NL2008/000131**

(87) International publication number:
**WO 2008/140303 (20.11.2008 Gazette 2008/47)**

(54) **SYSTEM FOR ARRANGING LINES IN A FLOOR AND TILE FOR USE THEREIN**

SYSTEM ZUR ANORDNUNG VON LEITUNGEN IN EINEM BODEN UND FLIESE DAFÜR

SYSTÈME SERVANT À DISPOSER DES LIGNES DANS UN SOL ET DALLE ASSOCIÉE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **16.05.2007 NL 1033859**

(43) Date of publication of application:
**03.02.2010 Bulletin 2010/05**

(73) Proprietor: **Infill Systems B.V.**
**2611 HA Delft (NL)**

(72) Inventor: **VAN RANDEN, Age**
**NL-1217 JV Hilversum (NL)**

(74) Representative: **Bartelds, Erik**
**Arnold & Siedsma**
**Bezuidenhoutseweg 57**
**2594 AC The Hague (NL)**

(56) References cited:
**EP-A- 1 063 478      EP-A- 1 493 973**
**WO-A- 02/37032      DE-U1- 20 013 462**

## Description

The present invention relates to a system for arranging lines in a floor and to a tile for forming such a floor in which lines can be received. The invention relates more particularly to a system as described in the preamble of claim 1 and a tile as described in the preamble of claim 11. Such a system and such a tile are known from EP 1 493 973 A.

In conventional construction lines - for instance electricity lines, water pipes and/or gas pipes - are laid in floors by being placed on a load-bearing floor in a desired pattern and then arranging on the load-bearing floor a finishing layer in which the lines are embedded and fixed. This is a labour-intensive and time-consuming process which moreover offers little or no flexibility; electricity, water and/or gas can only be taken off at those points in the building where the lines emerge and which are fixed from the moment that the floor is finished. Arranging take-off points at other locations entails a great deal of extra work since for this purpose the existing lines must be repositioned or new lines must be laid.

In addition, it is already known to accommodate electricity lines and data cables in wall-mounted skirting boards which are placed along the bottom of walls in a building. These skirting boards are however not suitable for receiving gas pipes or water pipes, so that they still have to be accommodated in conventional manner in the finishing floor. In addition, such wall-mounted skirting boards are not very attractive, and the use thereof requires a relatively large amount of line material since the lines cannot be guided directly to the take-off points but must always run along the walls of a room.

In applicants's earlier international patent publication WO 88/04713 a system is therefore already proposed with which many different types of line can be laid in a floor rapidly and easily and with a high degree of flexibility. This known system consists of a large number of square tiles, referred to as matrix tiles, which are placed adjacently of each other on a load-bearing floor. In the upper surface of each tile is formed a rectangular grid of channel segments, which each run parallel to one of the sides of the tile.

When the tiles are arranged adjacently of each other in two mutually perpendicular directions, the channel segments of the adjacent tiles together form in each case a continuous channel. The necessary lines can then be placed in these channels. After placing of the lines the tile floor is also covered with a finishing layer of for instance panels of wood, plastic or fibre-reinforced plaster, on which a floor covering can then be laid. Further formed along each side edge in the bottom surface of each tile is a recess which forms a channel together with the recess of the adjacent tile. In these channels on the underside of the tiles can be arranged lines which must remain separated from the lines in the channels in the upper surface, such as for instance gas pipes or discharge pipes for waste water.

The above described system has the advantage relative to the conventional method of laying lines that the lines can be arranged more quickly and easily, and can also be displaced in relatively rapid and simple manner. With the system according to WO 88/04713 the lines can in addition also be separated from each other in accordance with their function, and be accommodated at different levels in the floor.

The system as described in WO 88/04713 has the drawback however that, like skirting systems, it requires a relatively large amount of line material. In addition, the lines, particularly when they must be run diagonally through a space, must be curved through quite acute angles, and this is still unexpectedly time-consuming.

The above-identified prior art document EP 1 493 973 A discloses a system for arranging tubes of a heating or cooling system in a floor. This system includes a plurality of rectangular tiles made from a foamed heat conducting metal, e.g. aluminum. In the top surface of each tile four series of mutually parallel grooves or channels are formed. The first and second series of grooves are parallel to the long and short sides of the tiles, respectively, and intersect each other at right angles. The third and fourth series of grooves form diagonals connecting all intersections. At the intersections where all four series of grooves meet there are large area recesses in the tile.

From DE 200 13462 U1 another system is known for arranging heating or cooling tubes in a floor. This system includes a relatively large flat plate having various series of protrusions protruding from its upper surface in repetitive patterns. Each series of protrusions has different dimensions. These protrusions define four series of mutually parallel pathways for the tubes. The first and second series of pathways are again parallel to the long and short sides of the rectangular plate and intersect each other at right angles. The third and fourth series of pathways form diagonals which intersect each other at non-right angles and intersect the first and second series of pathways at various points. These intersections of the four series form large open areas between the protrusions.

The invention therefore has for its object to provide a system of the above described type in which these drawbacks do not occur, or at least do so to lesser extent. This is achieved according to the invention by a system as described in claim 1. Preferred embodiments of the system according to the invention form the subject matter of dependent claims 2-10.

In addition, the invention has for its object to provide a tile with which such a system can be constructed in rapid and simple manner. This is achieved according to the invention by a tile as defined in claim 11. Preferably applied variants of this tile are described in dependent claims 12-16.

When compared to the system of WO 88/04713 a greater flexibility in the choice of the path of the lines in the floor is achieved by also forming in the floor, in addition to a first and second series of channels which run parallel to each other per series and perpendicularly intersect the channels of the other series, a third and a fourth series of channels which intersect the channels of the first and second series at non-right angles. By accommodating the lines partly in the channels of the third or fourth series, it is possible to as it were "cut" the corners between channels of the first and second series, whereby a considerable reduction in the required amount of line material is achieved.

By forming the channel segments in the top surface of the tiles, a structurally simple solution is achieved In this case relatively simple moulds can be used for the production of the tiles, while the placing of the lines in the channel segments also causes little difficulty.

By arranging the channels of the third and fourth series such that no more than three channels ever mutually intersect at the same point, the floor is prevented from being severely weakened locally.

This can be achieved in relatively simple manner by forming each of the channels of the third and fourth series at an angle of 45 degrees to those of the first and second series and by selecting the centre-to-centre distance of the channels of the third and fourth series to be $\sqrt{2}$ times greater than the centre-to-centre distance of the channels of the first and second series. The channels of the third and fourth series thus form as it were diagonals in the perpendicular network of channels of the first and second series which, as a result of their differing centre-to-centre distance, intersect the channels of the first and second series at different locations.

The centre-to-centre distance of the channels of the first and second series can otherwise be selected to equal 10 or 20 cm. The primary grid hereby then becomes a so-called "10-20 cm line grid", which is applied on a large scale in the construction industry. Such 10-20 cm line grids are shown in construction drawings, so that the location of the channels can be readily determined in this manner.

Recesses can be arranged in the floor for receiving structural elements, to which a covering floor can for instance be attached. These recesses can be arranged in a part of the floor which is bounded only by channels of the first and second series, and which is thus not intersected by channels of the third and/or fourth series. This ensures that sufficient material is present around the recesses to be able to withstand loads exerted by the structural elements.

In order to also enable a separation of lines at different levels in the system according to the invention, a secondary grid can be formed in the floor at a different level from the primary grid. This secondary grid comprises at least a fifth and a sixth series of channels, which are again parallel per series and intersect each other perpendicularly. In addition, the secondary grid can also comprise a seventh and optionally even an eighth series of channels, which once again intersect the channels of the fifth and sixth series at non-right angles. In order to prevent the floor becoming too weakened locally by the intersection of a large number of channels at one point, the path of the seventh and eighth channels can also be chosen such that, also at the level of the secondary grid, no more than three channels ever mutually intersect at the same point. The principle forming the basis of the invention can hereby also be applied in the secondary grid.

In addition, the secondary grid can be offset relative to the primary grid so that the floor is not weakened unnecessarily by channels of the primary and secondary grid running directly one above the other.

Because the secondary grid is particularly intended for the purpose of receiving discharge pipes, of which there will not be too many in a normal building, it does not have to be as fine-meshed as the primary grid. The centre-to-centre distances in the secondary grid can therefore be greater than those in the primary grid. In order to prevent coinciding of channels in the primary and secondary grid, the centre-to-centre distances in the secondary grid can be chosen as an integer multiple of those in the primary grid when the grids are offset relative to each other.

The separation between the primary and secondary grid can be brought about in simple manner by forming the channel segments of the primary grid in the top surface of the tiles and those of the secondary grid in the bottom surface. It is however also possible to envisage the channel segments of the secondary grid likewise being formed in the top surface of the tile, but lying deeper than those of the primary grid.

In view of their function, the channels of the secondary grid can be wider than those of the primary grid, wherein some of the channels of the primary grid can then be formed along the edges of the channels of the secondary grid.

In order to simplify the alignment and laying against each other of the channel segments, the tiles can be rectangular or square and the channels of the first and second series, and optionally those of the fifth and sixth series, in each case run parallel to a pair of sides of the tiles. Some of the channels of the first, second, fifth and/or sixth series can also run along a side of each tile, wherein the whole channel is then formed by placing the sides of two tiles against each other. The tiles can here further be provided with connecting means, for instance protrusions and recesses or separate clamps, in order to prevent shifting.

Depending on the size of the tiles and the centre-to-centre distance of the channels, one or more channel segments of each series can be formed in each tile. When the centre-to-centre distances in the secondary grid are chosen to be considerably greater than those in the primary grid, it is also possible to envisage that while channel segments of the primary grid are formed in some tiles, channel segments of the secondary grid are not.

In order to prevent nuisance resulting from contact noise the tiles can be covered on their underside with a damping material, or even be manufactured therefrom.

The tiles are preferably formed in a mould from a curable cast mass or injection mass. Such a cast mass or injection mass can be a type of concrete but also a plastic, such as polystyrene (EPS) for expanding in the mould. By forming the tiles in a mould the channel segments can be recessed therein at the correct location in simple manner. The damping material of the bottom surface can be integrated in the plastic, for instance by manufacturing the tile partially from relatively hard EPS and partially from elasticized EPS, so-called EPS-T.

Finally, the tiles are preferably manufactured from a readily processed material. Extra channels can thus also be formed by processing the tiles, for instance after placing of non-load-bearing partition walls on the floor, or at least after determining the location thereof. These extra channels may be necessary for accommodating lines running in the partition wall when a door or other opening is provided in this wall. The lines must then be carried through below this door opening. Because the partition walls will not always be placed directly above an already present channel, and because the preformed channels will often not be large enough for the plurality of lines running through the wall, an additional channel must then be formed, or at least one of the existing channels must be enlarged. When the tiles are manufactured from a plastic, such as expanded polystyrene, such additional channels can be formed in simple manner using an electric tool with a hot element in the form of the channel to be formed.

The position of the additional channels can be readily determined by plotting a 10-20 cm line grid on the tiles. When the centre-to-centre distance of the channels of the first and second series is already equal to 10 or 20 cm, it is of course no longer necessary to arrange a separate line grid.

The invention is now elucidated on the basis of a number of examples, wherein reference is made to the accompanying drawing, in which:

Fig. 1 is a schematic perspective view of a space in a building, which space is provided with a system according to a first embodiment of the invention,

Fig. 2 is a top view of a part of the floor of the space of fig. 1, in which the path of the first, second, third and fourth series of channels can be seen,

Fig. 3 is a view corresponding with fig. 2 showing a different path of the channels,

Fig. 4 is a schematic perspective view of a tile applied in the system of fig. 1 and 2,

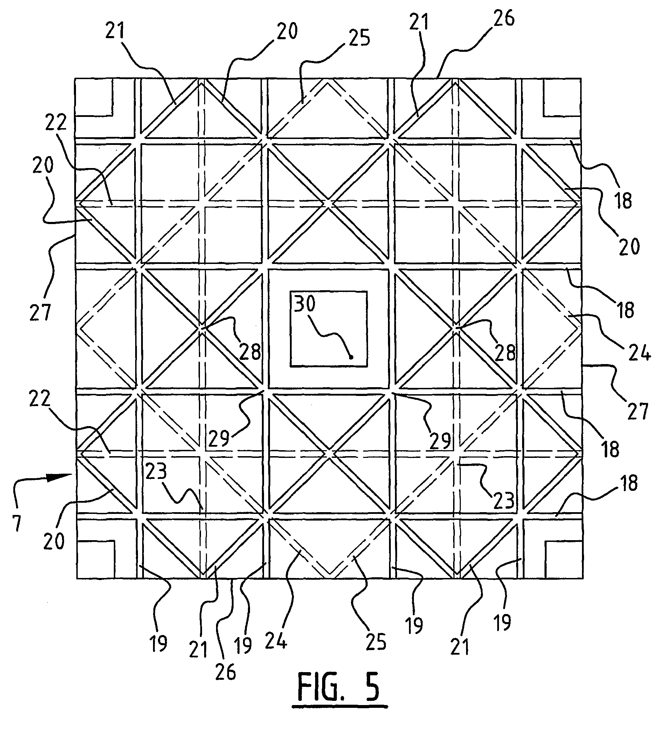

Fig. 5 is a top view of a tile for applying in the system according to fig. 3,

Fig. 6 is a schematic perspective view of a space in a building, in which a second embodiment of the system according to the invention is applied,

Fig. 7 is a top view of a tile of the system of fig. 5,

Fig. 8 is a side view of the tile of fig. 7,

Fig. 9, 10 and 11 show cross-sections along lines IX-IX, X-X, XI-XI respectively in fig. 8,

Fig. 12 shows a cross-section of a connection between two adjacent tiles,

Fig. 13 is a detail view on enlarged scale as according to arrow XIII in fig. 12,

Fig. 14 is a top view of the detail of fig. 13,

Fig. 15 shows a schematic cross-section of a relatively wide channel segment in which two lines are mounted by means of a fastening member,

Fig. 16 shows an alternative embodiment of the fastening member of fig. 15, and

Fig. 17 is a top view of the fastening member of fig. 15 or 16.

A space 1 in a building is bounded by a number of walls 2. In the shown example they are non-load-bearing partition walls which, are placed on a finishing floor 3. This finishing floor 3 is arranged on a load-bearing floor 4 of the building, which may extend below a number of adjacent rooms 1. Finishing floor 3 is constructed from a substrate 5 and a cover layer 6. Substrate 5 is in turn made up of a large number of tiles 7. In the shown example tiles 7 are all square and laid in rows R and columns C.

Present in space 1 is a system for arranging lines, such as electricity lines E, gas pipes G, water pipes W and/or discharge pipes D, in finishing floor 3. In the shown example this system consists of a primary grid of channels and a secondary grid of channels located thereunder. The primary grid is constructed from a first series of channels 8 and a second series of channels 9. These channels 8, 9 define a plane lying parallel to load-bearing floor 4 and intersect each other perpendicularly. Up to this point the system has a conventional structure.

According to the invention the primary grid is further provided in the same plane with a third series of channels 10 which intersect channels 8, 9 of the first and second series at a non-right angle. In the shown example this angle amounts to 45 degrees. In addition, the primary grid here has a fourth series of channels 11, once again in the same plane, which also intersect channels 8, 9 of the first and second series at a non-right angle, in this example again 45 degrees. Channels 10, 11 of the third and fourth series thus make it possible to guide lines diagonally through space 1 over at least a part of their length, whereby considerably less line material is necessary.

The secondary grid is likewise constructed in conventional manner from a fifth series of channels 12 and a sixth series of channels 13, which together define a plane and which intersect each other perpendicularly. In addition, the secondary grid likewise comprises a seventh series of channels 14 and an eighth series of channels 15, which lie in the same plane and which intersect channels 12, 13 of the fifth and sixth series at a non-right angle. Here also the channels 14 and 15 of the seventh and eighth series each run at an angle of 45 degrees to channels 12, 13 of the fifth and sixth series.

Channels 8-15 of the primary and secondary grid are here formed by mutually connecting channel segments 18-25 arranged in tiles 7. The first, second, third and fourth channel segments 18-21, which form channels 8-11 of the first, second, third and fourth series, are here arranged in top surfaces 16 of tiles 7, while the fifth, sixth, seventh and eighth channel segments 22-25, which form channels 12-15 of the fifth, sixth, seventh and eighth series, are arranged in bottom surfaces 17 of tiles 7.

In the shown example tiles 7 are relatively large and, for each series of channels 8-15, have a number of corresponding channel segments 18-25. Is however also possible to envisage use being made of smaller tiles, in which only a single segment is formed for each series of channels 8-15.

As stated, tiles 7 are square and have two pairs of mutually parallel sides 26, 27. The first and fifth channel segments 18, 22 herein run parallel to sides 26, while the second and sixth channel segments 19, 23 run parallel to sides 27. The third, fourth, seventh and eighth channel segments 20, 21, 24 and 25 run diagonally through respectively top surface 16 and bottom surface 17 of each tile.

Channel segments 18-25 are arranged in each tile 7 such that no more than three segments ever intersect each other at the same point. This prevents tile 7 being weakened too much at the position of the intersections. In the shown example this is achieved by a careful adjustment of the centre-to-centre distance between the different channel segments of the same series and a suitable placing of the diagonal channel segments 20, 21, 24 and 25 relative to the orthogonal channel segments 18, 19, 22 and 23. The centre-to-centre distance $h_1$ of the first and second channel segments 18, 19 is here the same, while centre-to-centre distance $h_2$ of the third and fourth channel segments 20, 21 is also the same and is . 2 times greater than the first centre-to-centre distance $h_1$:

$$h_2 = h_1 * .2$$

The centre-to-centre distance $h_1$ of the first and second channel segments 18, 19 can also equal 10 or 20 cm. The primary grid hereby then becomes a so-called "10-20 cm line grid", which is applied on a large scale in the construction industry. Such 10-20 cm line grids are normally shown in construction drawings, so the location of the channels can be readily determined in this way.

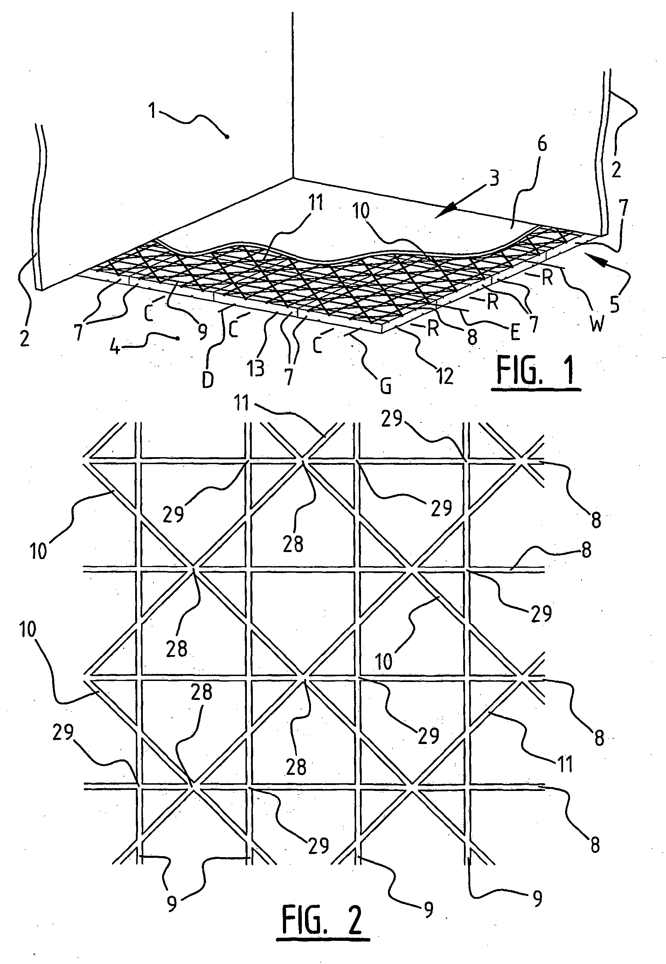

The third and fourth channel segments 20, 21 are further placed such that their intersections 28 do not coincide with intersections 29 of the first and second channel segments 18, 19. In the shown example these intersections 28 lie in each case halfway between intersections 29 of the first and second channel segments 18, 19 (fig. 2). Intersections 28 do not per se have to lie exactly halfway between intersections 29 in order to achieve the desired effect, but this does prevent the triangular parts of tile 7 enclosed between a first and second channel segment 18, 19 and a third or fourth channel segment 20 or 21 becoming too small and therefore too weak.

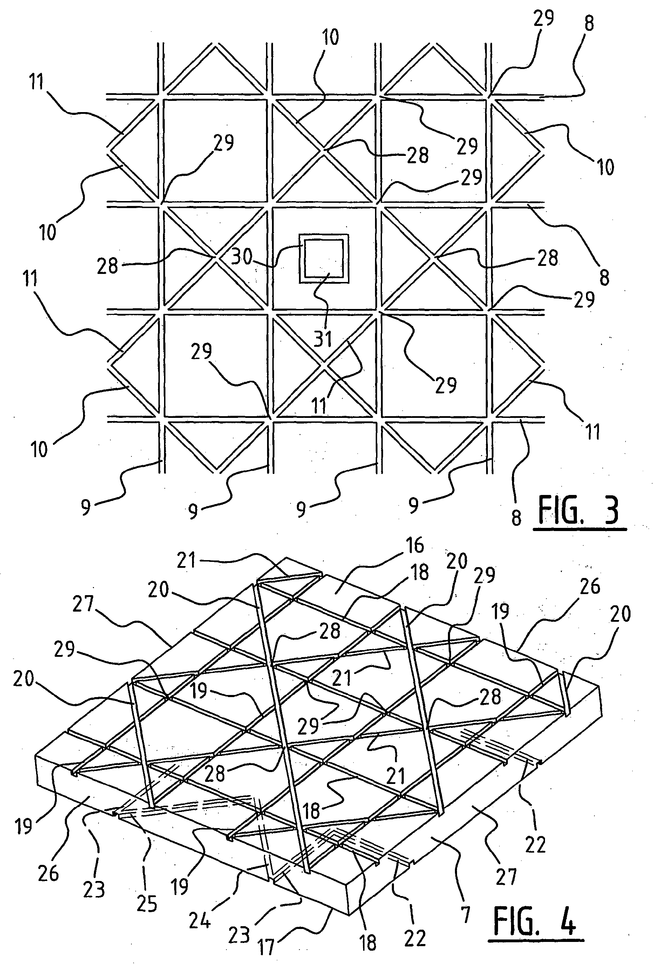

In an alternative embodiment intersections 28 of the third and fourth channel segments 20, 21 lie in each case in the centre of a square grid area bounded by the first and second channel segments 20, 21 (fig. 3). This placing has the advantage that relatively large grid areas also remain free of diagonal channels 20 or 21. In these grid areas can then be formed recesses 30 in which structural elements 31 can be received to which the cover layer 6 of finishing floor 3 can be fixed. Structural elements 31 are for instance plates of a screwable material such as wood or plastic, onto which cover layer 6 can be fixedly screwed.

Channel segments 22-25 of the secondary grid, which are formed in bottom surface 17 of tile 7, are positioned in similar manner to channel segments 18-21 of the primary grid. The centre-to-centre distance $h_3$ is here also the same for the fifth and sixth channel segments 22, 23, and centre-to-centre distance $h_4$ of the seventh and eighth channel segments 24, 25 is equal to .2 times the third centre-to-centre distance $h_3$:

$$h_4 = h_3 * .2$$

In order to prevent tile 7 from being unnecessarily weakened by coinciding of channel segments of the primary and secondary grid, the secondary grid is offset relative to the primary grid and the third and fourth centre-to-centre distances $h_3$, $h_4$ are each a whole multiple of the first and second centre-to-centre distances $h_1$, $h_2$.

The system according to the invention thus makes it possible in rapid and simple manner to arrange lines in a finishing floor 3. For this purpose tiles 7 only have to be laid adjacently of each other on load-bearing floor 4, after which the lines can be easily placed in channels 8-11 in top surface 16 of tiles 7.

Lines to be optionally received in channels 12-15 in bottom surface 17 can be pushed under tiles 7 from the side, although they can also be laid on load-bearing floor 4 before placing of tiles 7, after which tiles 7 are placed thereover. As a result of the presence of the diagonally running channels 10, 11, 14, 15 lines can be guided to almost any desired point in space 1 while using up relatively little line material.

As indicated above, after laying of tiles 7 additional channels can optionally be formed therein for the purpose of receiving lines which come from partition walls 2 for placing on finishing floor 3, and which must be carried through beneath a (door) opening formed therein.

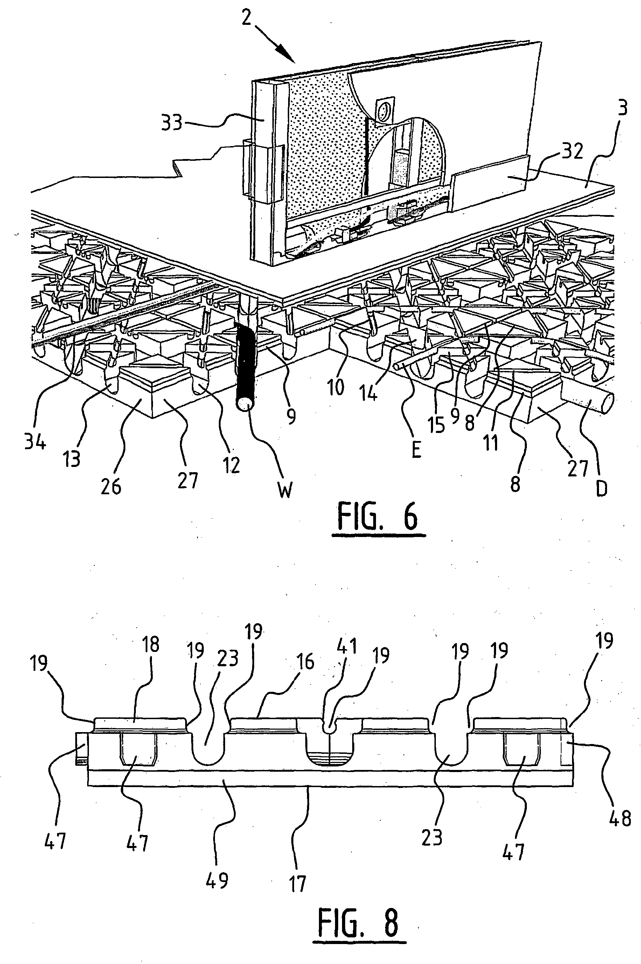

In an alternative embodiment of the system according to the invention not only channels 8-11 of the primary grid are arranged in top surfaces 16 of tiles 7, but also channels 12-15 of the secondary grid (fig. 6). The fifth, sixth, seventh and eighth channel segments 22-25 here extend to a greater depth into tiles 7 than the first, second, third and fourth channel segments 18-21. Not only are fifth, sixth, seventh and eighth channel segments 22-25 deeper than the first, second, third and fourth channel segments 12-15, but they are also wider in the shown example. Channels 12-15 of the secondary grid are hereby suitable for accommodating relatively thicker lines, such as water pipes W or discharge pipes D.

In this embodiment parts of first channel segments 18 are further formed along sides 26 while parts of second channel segments 19 are formed along sides 27. These parts have a width equal to half the width of a first or second channel segment 18, 19. When two tiles 7 are laid against each other, these parts therefore again form a first or second channel segment 18, 19.

This embodiment is here otherwise shown in combination with a system wall 2, which is provided with a skirting beam 32 as described in the non-prepublished international patent application PCT/NL2008/000099 of applicant, titled "Method and system for invisibly arranging cabling in a room". In the shown example this wall 2 ends at a door frame 33 and another channel 34 is formed in tiles 7 in line with wall 2, so at the position of the door opening, this channel not forming part of the regular primary and secondary grids formed during manufacture of the tiles.

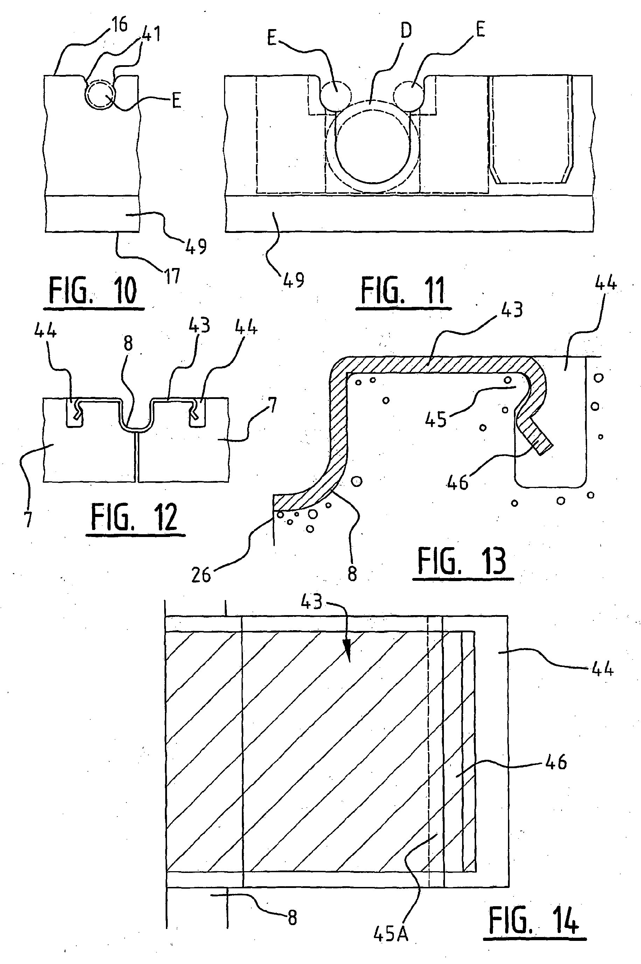

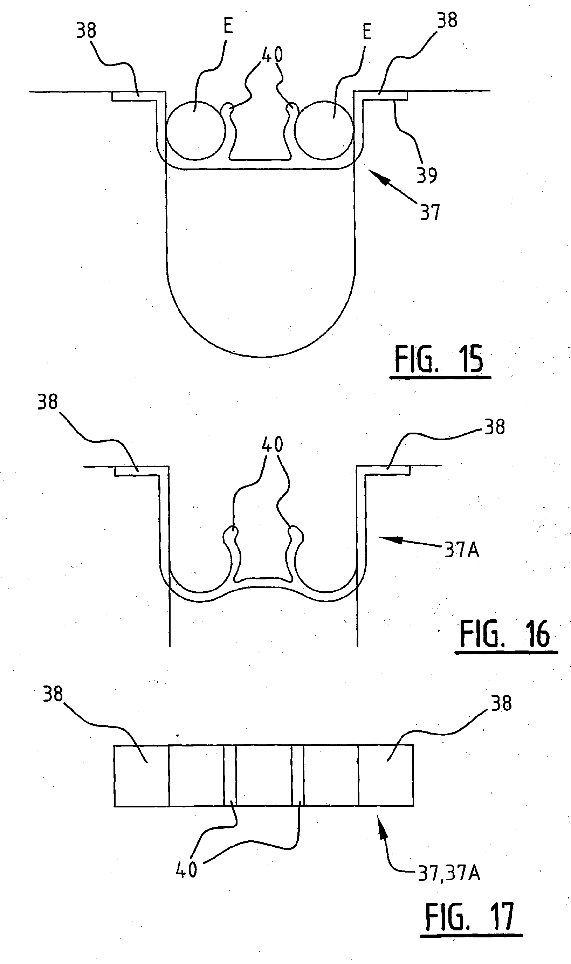

In this embodiment parts of the first, second, third and fourth channel segments 18-21 are further formed on either side along the edges of the fifth, sixth, seventh and eighth channel segments 22-25, whereby these composite channel segments have a widened open top side in cross-section (fig. 8, 9 and 11) . In these composite channel segments two thinner lines, for instance electricity lines E, can be arranged on a thicker line, for instance a water pipe W (fig. 11). Conversely, it is also possible to mount two thinner lines E in a relatively deep and wide channel segment by making use of fastening elements 37 (fig. 15) which are arranged with flanges 38 in recesses 39 in tiles 7. Lines E are here clamped into fastening elements 37 by resilient upright elements 40. In order to accommodate lines E at a greater depth in the channel segment use can be made of higher fastening elements 37A (fig. 16).

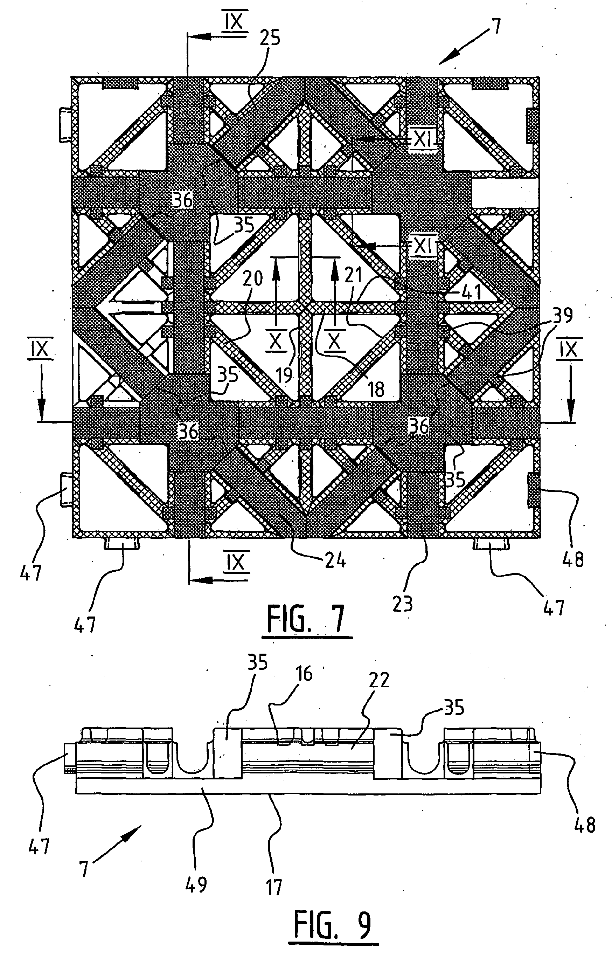

In order to hold the lines in place in the first, second, third and fourth channel segments 18-21, these channel segments 18-21 are here provided locally with protruding edge parts 41 (fig. 9).

Formed in tiles 7 at the position of the intersections 35 of the fifth, sixth, seventh and eighth channel segments 22-25 are relatively large recesses which in top view take the form of a diabolo (fig. 7). Two opposite corners 36 of the recess are as it were cut away to this shape, whereby space is created allowing a bend in the relatively thick lines, as shown in fig. 6.

In order to enable mutual fixing of tiles 7 and thus hold the different channel segments precisely in line, connecting means 42 can be arranged between tiles 7. These connecting means 42 can be formed by clamps 43 extending over the parts of the first and second channel segments 18, 19 along side edges 26, 27 and engaging in recesses 44 along these edges 26, 27 (fig. 12). Recesses 44 can be provided over their full length or over a part thereof with an inward protruding edge 45, 45A respectively (fig. 14), behind which a resilient tongue 46 of clamp 43 is hooked (fig. 13).

Another possible embodiment of connecting means 42 is shown in fig. 7 and 8; tiles 7 can each be provided along their side edges 26, 27 with protrusions 47 and recesses 48 receiving these protrusions.

In the embodiment shown here tiles 7 are otherwise each provided on their bottom surface 17 with a layer of damping material 49 which serves to prevent nuisance from contact noise. Use is made here of tiles 7 manufactured from plastic, wherein damping layer 49 is integrated into the plastic. In the shown example expanded polystyrene (EPS) is chosen as plastic, wherein damping layer 49 is manufactured from plasticized EPS which is known commercially as EPS-T (the T standing for "Trittschall", i.e. contact noise).

Although the invention is described above on the basis of two embodiments, it will be apparent that it is not limited thereto. It is thus also possible to envisage a different path of the oblique channels, wherein they enclose angles of more or less than 45 degrees with the orthogonal channels. The tiles can further have a configuration other than shown here. For some applications it will in addition be possible to suffice with only a primary grid of channels, for instance only in top surface 16 of each tile 7. Tiles 7 can take a larger or smaller form than shown here, with more or fewer channel segments. As stated, tiles 7 can be cast in a mould or expanded from a suitable material, for instance concrete or a plastic such as polystyrene, wherein the channels are formed by a suitable form of the mould. It is however also possible to envisage tiles 7 being manufactured from a plate material in which the channel segments are formed by mechanical, chemical or thermal machining.

The scope of the invention is therefore defined solely by the following claims.

## Claims

1. System for arranging lines (D, E, G, W) in a floor (3), comprising a primary grid of channels formed in the floor (3) for the purpose of receiving the lines (D, E, G, W),

   this primary grid comprising a first and a second series of mutually parallel channels (8, 9), wherein the channels of the first series (8) and of the second series (9) lie substantially in the same plane and intersect each other substantially perpendicularly,

the primary grid further comprising a third series of mutually parallel channels (10) which lie substantially in the same plane as the first and second series of channels (8, 9) and which intersect the channels (8, 9) of the first and second series at non-right angles, and

the primary grid further comprising a fourth series of mutually parallel channels (11) which lie substantially in the same plane as the first, second and third series of channels (8, 9, 10) and which intersect the channels (8, 9) of the first and second series at non-right angles,

wherein the floor (3) is assembled from a number of adjacently laid tiles (7), and the channels (8-15) are formed by corresponding channel segments (18, 25) in adjacent tiles (7), each tile (7) having a top surface (16) and a bottom surface (17), and the channels (8-11) of the primary grid being formed in the top surface (16) of each tile (7),

**characterized in that** the channels (10, 11) of the third and fourth series have a path such that no more than three channels of the primary grid ever mutually intersect at the same point (28, 29).

2. System as claimed in claim 1, **characterized in that** the channels (10, 11) of the third and/or the fourth series intersect the channels (8, 9) of the first and the second series in each case at angles of substantially 45 degrees.

3. System as claimed in claim 2, **characterized in that** the channels (8, 9) of the first and the second series are arranged at a first centre-to-centre distance ($h_1$) in the floor (3) and the channels (10, 11) of the third and/or the fourth series are arranged at a second centre-to-centre distance ($h_2$) in the floor (3), this second centre-to-centre distance ($h_2$) being $\sqrt{2}$ times greater than the first centre-to-centre distance ($h_1$).

4. System as claimed in any of the foregoing claims, **characterized by** a secondary grid of channels which is formed in the floor (3) at a different level from the primary grid, and which comprises a fifth and a sixth series of mutually parallel channels (12, 13), wherein the channels of the fifth series (12) and of the sixth series (13) lie substantially in the same plane and intersect each other substantially perpendicularly.

5. System as claimed in claim 4, **characterized in that** the secondary grid comprises:

a seventh series of mutually parallel channels (14) which lie substantially in the same plane as the fifth and sixth series of channels (12, 13) and which intersect the channels (12, 13) of the fifth and sixth series at non-right angles, and an eighth series of mutually parallel channels (15) which lie substantially in the same plane as the fifth, sixth and seventh series of channels (12, 13, 14), and which intersect the channels (12, 13) of the fifth and sixth series at non-right angles,

wherein the channels (14, 15) of the seventh and eighth series preferably have a path such that no more than three channels at the secondary grid ever mutually intersect at the same point.

6. System as claimed in claims 4 or 5, **characterized in that** the channels (14, 15) of the seventh and/or the eighth series intersect the channels (12, 13) of the fifth and the sixth series in each case at angles of substantially 45 degrees.

7. System as claimed in any of the claims 4-6, **characterized in that** the channels (12-15) of the secondary grid are formed in the bottom surface (17) of each tile (7).

8. System as claimed in any of the claims 4-6, **characterized in that** the channels (12-15) of the secondary grid are formed in the top surface (16) of each tile (7) and extend to a greater depth in the tile (7) than the channels (8-11) of the primary grid.

9. System as claimed in claim 8, **characterized in that** at least some (8, 9) of the channels (8-11) of the primary grid are formed along edges of the channels (12-15) of the secondary grid.

10. System as claimed in any of the preceding claims, **characterized in that** the tiles (7) are rectangular or square, and the first and second series of channels (8, 9) each run parallel to a pair of sides (26, 27) of each tile (7),
wherein preferably at least some of the channels (8, 9, 12, 13) of the first, second, fifth and/or sixth series run along a side (26, 27) of each tile (7).

11. Tile (7) for forming a floor (3) as defined in any of the preceding claims in which lines (D, E, G, W) can be received, comprising:

at least one first channel segment (18) and at least one second channel segment (19), which channel segments (18, 19) run substantially parallel to a main plane of the tile (7) and intersect each other substantially perpendicularly,
at least one third channel segment (20) which lies substantially in the same plane as the first and second channel segment (18, 19) and runs at a non-right angle relative thereto, and
at least one fourth channel segment (21) which lies substantially in the same plane as the first, second and third channel segment (18, 19, 20) and runs at a non-right angle relative to the first and second channel segment (18, 19),

wherein the tile (7) has a top surface (16) and a bottom surface (17), and the first, second, third and/or fourth channel segment (18-21) are formed in the top surface (16), **characterized in that** the third and fourth channel segment (20, 21) have a path such that no more than three channel segments ever mutually intersect at the same point (28, 29).

12. Tile (7) as claimed in claim 11, **characterized in that** the third and/or the fourth channel segment (20, 21) run at an angle of substantially 45 degrees relative to the first and the second channel segment (18, 19).

13. Tile (7) as claimed in claim 11 or 12, **characterized by** at least one fifth channel segment (22) and at least one sixth channel segment (23), which fifth and sixth channel segment (22, 23) each run substantially parallel to the main plane of the tile (7) at a distance from the plane of the first, second and third channel segment (18, 19, 20), and intersect each other substantially perpendicularly.

14. Tile (7) as claimed in claim 13, **characterized by:**

at least one seventh channel segment (24) which lies substantially in the same plane as the fifth and sixth channel segment (22, 23) and runs at a non-right angle relative thereto, and at least one eighth channel segment (25) which lies substantially in the same plane as the fifth, sixth and seventh channel segment (22, 23, 24) and runs at a non-right angle relative to the fifth and sixth channel segment (22, 23),

wherein the seventh and eighth channel segment (24, 25) preferably have a path such that no more than three channel segments ever mutually intersect at the same point.

15. Tile (7) as claimed in claim 13 or 14, **characterized in that** the fifth and the sixth channel segment (22, 23) are formed in the bottom surface (17).

16. Tile (7) as claimed in claim 13 or 14 **characterized in that** the fifth and the sixth channel segment (22, 23) are formed in the top surface (16) and extend to a greater depth than the channel segments (18-21) of the primary grid.

**Patentansprüche**

1. System zur Anordnung von Leitungen (D, E, G, W) in einem Boden (3), aufweisend ein primäres Raster von im Boden (3) zum Zwecke der Aufnahme der Leitungen (D, E, G, W) ausgebildeten Kanälen, wobei das primäre Raster eine erste und zweite Folge von zueinander parallelen Kanälen (8, 9) aufweist, wobei die Kanäle der ersten Folge (8) und die Kanäle der zweiten Folge (9) im Wesentlichen in der gleichen Ebene liegen und einander im Wesentlichen senkrecht schneiden, wobei das primäre Raster weiterhin eine dritte Folge von zueinander parallelen Kanälen (10) aufweist, die im Wesentlichen auf der gleichen Ebene wie die erste und zweite Folge von Kanälen (8, 9) liegen und die die Kanäle (8, 9) der ersten und zweiten Folge in nicht-rechten Winkeln schneiden, und wobei das primäre Raster weiterhin eine vierte Folge von zueinander parallelen Kanälen (11) aufweist, die im Wesentlichen auf der gleichen Ebene wie die erste, zweite und dritte Folge von Kanälen (8, 9, 10) liegen und die die Kanäle (8, 9) der ersten und zweiten Folge in nicht-rechten Winkeln schneiden, wobei der Boden (3) aus einer Folge von nebeneinander ausgelegten Fliesen (7) zusammengefügt ist und die Kanäle (8 - 15) durch entsprechende Kanalsegmente (18, 25) in benachbarten Fliesen (7) ausgebildet sind, wobei jede Fliese (7) eine Oberseite (16) und eine Unterseite (17) hat und die Kanäle (8 - 11) des primären Rasters in der Oberseite (16) einer jeden Fliese (7) ausgebildet sind, **dadurch gekennzeichnet, dass** die Kanäle (10, 11) der dritten und vierten Folge einen Pfad aufweisen, sodass sich jeweils nicht mehr als drei Kanäle des primären Rasters miteinander am gleichen Punkt schneiden (28, 29).

2. System nach Anspruch 1, **dadurch gekennzeichnet, dass** die Kanäle (10, 11) der dritten und/oder vierten Folge die Kanäle (8, 9) der ersten und zweiten Folge in jedem Fall in Winkeln von im Wesentlichen 45° schneiden.

3. System nach Anspruch 2, **dadurch gekennzeichnet, dass** die Kanäle (8, 9) der ersten und der zweiten Folge in einem ersten Mitte-zu-Mitte-Abstand ($h_1$) im Boden (3) angeordnet sind und die Kanäle (10, 11) der dritten und/oder der vierten Folge in einem zweiten Mitte-zu-Mitte-Abstand ($h_2$) im Boden (3) angeordnet sind, wobei der zweite Mitte-zu-Mitte-Abstand ($h_2$) $\sqrt{2}$ mal größer als der erste Mitte-zu-Mitte-Abstand ($h_1$) ist.

4. System nach einem der vorhergehenden Ansprüche, **gekennzeichnet durch** ein sekundäres Raster von Kanälen, das im Boden (3) auf einer anderen Ebene wie das primäre Raster ausgebildet ist und das eine fünfte und sechste Folge von zueinander parallelen Kanälen (12, 13) aufweist, wobei die Kanäle der fünften Folge (12) und der sechsten Folge (13) im Wesentlichen in der gleichen Ebene liegen und einander im Wesentlichen senkrecht schneiden.

**5.** System nach Anspruch 4, **dadurch gekennzeichnet, dass** das sekundäre Raster aufweist:

eine siebte Folge von zueinander parallelen Kanälen (14), die im Wesentlichen in der gleichen Ebene wie die fünfte und sechste Folge der Kanäle (12, 13) liegen und die die Kanäle (12, 13) der fünften und sechsten Folge in nicht-rechten Winkeln schneiden, und
eine achte Folge von zueinander parallelen Kanälen (15), die im Wesentlichen in der gleichen Ebene wie die fünfte, sechste und siebte Folge der Kanäle (12, 13, 14) liegen und die die Kanäle (12, 13) der fünften und sechsten Folge in nicht-rechten Winkeln schneiden,

wobei die Kanäle (14, 15) der siebten und achten Folge vorzugsweise dergestalt einen Pfad aufweisen, dass sich im sekundären Raster jeweils nicht mehr als drei Kanäle einander am gleichen Punkt schneiden.

**6.** System nach Anspruch 4 oder 5, **dadurch gekennzeichnet, dass** die Kanäle (14, 15) der siebten und/oder achten Folge die Kanäle (12, 13) der fünften und sechsten Folge in jedem Fall in Winkeln von im Wesentlichen 45° schneiden.

**7.** System nach einem der Ansprüche 4 bis 6, **dadurch gekennzeichnet, dass** die Kanäle (12 - 15) des sekundären Rasters in der Unterseite (17) einer jeden Fliese (7) ausgebildet sind.

**8.** System nach einem der Ansprüche 4 bis 6, **dadurch gekennzeichnet, dass** die Kanäle (12 - 15) des sekundären Rasters in der Oberseite (16) einer jeden Fliese (7) ausgebildet sind und in einer größeren Tiefe in der Fliese (7) als die Kanäle (8 - 11) des primären Rasters verlaufen.

**9.** System nach Anspruch 8, **dadurch gekennzeichnet, dass** wenigstens einige (8, 9) der Kanäle (8 - 11) des primären Rasters entlang Kanten der Kanäle (12 - 15) des sekundären Rasters ausgebildet sind.

**10.** System nach einem der vorhergehenden Ansprüche, **dadurch gekennzeichnet, dass**
die Fliesen (7) rechteckig oder quadratisch sind, und die erste und zweite Folge der Kanäle (8, 9) jeweils parallel zu einem Seitenpaar (26, 27) einer jeden Fliese (7) verlaufen,
wobei vorzugsweise wenigstens einige der Kanäle (8, 9, 12, 13) der ersten, zweiten, fünften und/oder sechsten Folge entlang einer Seite (26, 27) einer jeden Fliese (7) verlaufen.

**11.** Fliese (7) zum Ausbilden eines Bodens (3), wie in einem der vorhergehenden Ansprüche definiert, in der die Leitungen (D, E, G, W) aufgenommen werden können, die aufweist:

wenigstens ein erstes Kanalsegment (18) und wenigstens ein zweites Kanalsegment (19), wobei die Kanalsegmente (18, 19) im Wesentlichen parallel zu einer Hauptebene der Fliese (7) verlaufen und einander im Wesentlichen senkrecht schneiden,
wenigstens ein drittes Kanalsegment (20), das im Wesentlichen in der gleichen Ebene wie das erste und zweite Kanalsegment (18, 19) liegt und in einem nicht-rechten Winkel bezüglich dazu verläuft, und
wenigstens ein viertes Kanalsegment (21), das im Wesentlichen in der gleichen Ebene wie das erste, zweite und dritte Kanalsegment (18, 19, 20) liegt und in einem nicht-rechten Winkel bezüglich des ersten und zweiten Kanalsegments (18, 19) verläuft,

wobei die Fliese (7) eine Oberseite (16) und eine Unterseite (17) aufweist, und das erste, zweite, dritte und/oder vierte Kanalsegment (18 - 21) in der Oberseite (16) ausgebildet sind,
**dadurch gekennzeichnet, dass** das dritte und vierte Kanalsegment (20, 21) dergestalt einen Pfad haben, dass sich jeweils nicht mehr als drei Kanalsegmente einander am gleichen Punkt (28, 29) schneiden.

**12.** Fliese (7) nach Anspruch 11, **dadurch gekennzeichnet, dass** das dritte und/oder das vierte Kanalsegment (20, 21) in einem Winkel von im Wesentlichen 45° bezüglich des ersten und zweiten Kanalsegments (18, 19) verlaufen.

**13.** Fliese (7) nach Anspruch 11 oder 12, **gekennzeichnet durch** wenigstens ein fünftes Kanalsegment (22) und wenigstens ein sechstes Kanalsegment (23), wobei das fünfte und sechste Kanalsegment (22, 23) jeweils im Wesentlichen parallel zur Hauptebene der Fliese (7) in einem Abstand von der Ebene des ersten, zweiten und dritten Kanalsegments (18, 19, 20) verlaufen und einander im Wesentlichen senkrecht schneiden.

**14.** Fliese (7) nach Anspruch 13, **gekennzeichnet durch**:

wenigstens ein siebtes Kanalsegment (24), das im Wesentlichen in der gleichen Ebene wie das fünfte und sechste Kanalsegment (22, 23) liegt und in einem nicht-rechten Winkel bezüglich dazu verläuft, und
wenigstens ein achtes Kanalsegment (24), das im Wesentlichen in der gleichen Ebene wie das fünfte, sechste und siebte Kanalsegment (22, 23) liegt und in einem nicht-rechten Winkel bezüglich des fünften und sechsten Kanalsegments (22, 23) verläuft,

wobei das siebte und achte Kanalsegment (24, 25) vorzugsweise einen Pfad haben, sodass nicht mehr als drei Kanalsegmente sich jeweils am gleichen Punkt schneiden.

**15.** Fliese (7) nach Anspruch 13 oder 14, **dadurch gekennzeichnet, dass** das fünfte und sechste Kanalsegment (22, 23) in der Unterseite (17) ausgebildet sind.

**16.** Fliese (7) nach Anspruch 13 oder 14, **dadurch gekennzeichnet, dass** das fünfte und sechste Kanalsegment (22, 23) in der Oberseite (16) ausgebildet sind und in einer größeren Tiefe als die Kanalsegmente (18 - 21) des primären Rasters verlaufen.

## Revendications

**1.** Système servant à agencer des lignes (D, E, G, W) dans un sol (3) comprenant une grille principale de canaux formés dans le sol (3) afin de recevoir les lignes (D, E, G, W),

cette grille principale comprenant une première et une deuxième séries de canaux mutuellement parallèles (8, 9), dans lequel les canaux de la première série (8) et de la deuxième série (9) se trouvent sensiblement dans le même plan et se croisent sensiblement perpendiculairement,

la grille principale comprenant en outre une troisième série de canaux mutuellement parallèles (10) qui se trouvent sensiblement dans le même plan que les première et deuxième séries de canaux (8, 9) et qui croisent les canaux (8, 9) des première et deuxième séries selon des angles non droits et

la grille principale comprenant en outre une quatrième série de canaux mutuellement parallèles (11) qui se trouvent sensiblement dans le même plan que les première, deuxième et troisième séries de canaux (8, 9, 10) et qui croisent les canaux (8, 9) des première et deuxième séries selon des angles non droits,

dans lequel le sol (3) est assemblé à partir d'un nombre de dalles posées de manière adjacente (7), et les canaux (8-15) sont formés par des segments de canaux correspondants (18, 25) dans des dalles adjacentes (7), chaque dalle (7) présentant une surface supérieure (16) et une surface inférieure (17), et les canaux (8-11) de la grille principale étant formés dans la surface supérieure (16) de chaque dalle (7), **caractérisé en ce que** les canaux (10, 11) des troisième et quatrième séries ont une trajectoire telle que guère plus de trois canaux de la grille principale ne se croisent jamais mutuellement au même point (28, 29).

**2.** Système selon la revendication 1, **caractérisé en ce que** les canaux (10, 11) de la troisième et/ou quatrième série croisent les canaux (8, 9) des première et deuxième séries dans chaque cas selon des angles de sensiblement 45 degrés.

**3.** Système selon la revendication 2, **caractérisé en ce que** les canaux (8, 9) des première et deuxième séries sont agencés à une première distance centre à centre ($h_1$) dans le sol (3) et les canaux (10, 11) des troisième et quatrième séries sont agencés à une seconde distance centre à centre ($h_2$) dans le sol (3), cette seconde distance centre à centre ($h_2$) étant $\sqrt{2}$ fois plus grande que la première distance centre à centre ($h_1$).

**4.** Système selon l'une quelconque des revendications précédentes, **caractérisé par** une grille secondaire de canaux qui est formée dans le sol (3) à un niveau différent de la grille principale, et qui comprend des cinquième et sixième séries de canaux mutuellement parallèles (12, 13), dans lequel les canaux de la cinquième série (12) et de la sixième série (13) se trouvent sensiblement dans le même plan et se croisent sensiblement perpendiculairement.

**5.** Système selon la revendication 4, **caractérisé en ce que** la grille secondaire comprend :

une septième série de canaux mutuellement parallèles (14) qui se trouvent sensiblement dans le même plan que les cinquième et sixième séries de canaux (12, 13) et qui croisent les canaux (12, 13) des cinquième et sixième séries selon des angles non droits et

une huitième série de canaux mutuellement parallèles (15) qui se trouvent sensiblement dans le même plan que les cinquième, sixième et septième séries de canaux (12, 13, 14) et qui croisent les canaux (12, 13) des cinquième et sixième séries selon des angles non droits,

dans lequel les canaux (14, 15) des septième et huitième série ont de préférence une trajectoire telle que guère plus de trois canaux sur la grille secondaire ne se croisent jamais mutuellement au même point.

**6.** Système selon la revendication 4 ou 5, **caractérisé en ce que** les canaux (14, 15) des septième et/ou huitième séries croisent les canaux (12, 13) des cinquième et sixième séries dans chaque cas selon des angles de sensiblement 45 degrés.

7. Système selon l'une quelconque des revendications 4 à 6, **caractérisé en ce que** les canaux (12-15) de la grille secondaire sont formés dans la surface inférieure (17) de chaque dalle (7).

8. Système selon l'une quelconque des revendications 4 à 6, **caractérisé en ce que** les canaux (12-15) de la grille secondaire sont formés dans la surface supérieure (16) de chaque dalle (7) et s'étendent à une plus grande profondeur dans la dalle (7) que les canaux (8-11) de la grille principale.

9. Système selon la revendication 8, **caractérisé en ce qu'**au moins certains (8, 9) des canaux (8-11) de la grille principale sont formés le long d'arêtes des canaux (12-15) de la grille secondaire.

10. Système selon l'une quelconque des revendications précédentes, **caractérisé en ce que** les dalles (7) sont rectangulaires ou carrées et les première et deuxième séries de canaux (8, 9) s'étendent chacune parallèlement à une paire de côtés (26, 27) de chaque dalle (7),
dans lequel de préférence au moins certains des canaux (8, 9, 12, 13) des première, deuxième, cinquième et/ou sixième série s'étendent le long d'un côté (26, 27) de chaque dalle (7).

11. Dalle (7) pour la formation d'un sol (3) selon l'une quelconque des revendications précédentes, dans laquelle des lignes (D, E, G, W) peuvent être reçues, comprenant :

au moins un premier segment de canal (18) et au moins un deuxième segment de canal (19), lesquels segments de canal (18, 19) s'étendent sensiblement parallèlement à un plan principal de la dalle (7) et se croisent sensiblement perpendiculairement,
au moins un troisième segment de canal (20) qui se trouve sensiblement dans le même plan que le premier et deuxième segment de canal (18, 19) et s'étend selon un angle non droit par rapport à ceux-ci et
au moins un quatrième segment de canal (21) qui se trouve sensiblement dans le même plan que les premier, deuxième et troisième segments de canal (18, 19, 20) et s'étend selon un angle non droit par rapport aux premier et deuxième segments de canal (18, 19),

dans lequel la dalle (7) a une surface supérieure (16) et une surface inférieure (17), et les premier, deuxième, troisième et/ou quatrième segment de canal (18-21) sont formés dans la surface supérieure (16), **caractérisée en ce que** les troisième et quatrième segments de canal (20, 21) ont une trajectoire telle que guère plus de trois segments de canal ne se croisent jamais mutuellement au même point (28, 29).

12. Dalle (7) selon la revendication 11, **caractérisée en ce que** le troisième et/ou le quatrième segment de canal (20, 21) s'étendent selon un angle de sensiblement 45 degrés par rapport aux premier et deuxième segments de canal (18, 19).

13. Dalle (7) selon la revendication 11 ou 12, **caractérisée par** au moins un cinquième segment de canal (22) et au moins un sixième segment de canal (23), lesquels cinquième et sixième segments de canal (22, 23) s'étendent chacun sensiblement parallèlement au plan principal de la dalle (7) à une distance du plan des premier, deuxième et troisième segments de canal (18, 19, 20) et se croisent sensiblement perpendiculairement.

14. Dalle (7) selon la revendication 13, **caractérisée par** :

au moins un septième segment de canal (24) qui se trouve sensiblement dans le même plan que le cinquième et sixième segments de canal (22, 23) et s'étend selon un angle non droit par rapport à ceux-ci et
au moins un huitième segment de canal (25) qui se trouve sensiblement dans le même plan que les cinquième, sixième et septième segments de canal (22, 23, 24) et s'étend selon un angle non droit par rapport au cinquième et sixième segments de canal (22, 23),

dans laquelle les septième et huitième segments de canal (24, 25) ont de préférence une trajectoire telle que guère plus de trois segments de canal ne se croisent jamais mutuellement au même point.

15. Dalle (7) selon la revendication 13 ou 14, **caractérisée en ce que** le cinquième et le sixième segments de canal (22, 23) sont formés dans la surface inférieure (17).

16. Dalle (7) selon la revendication 13 ou 14, **caractérisée en ce que** le cinquième et le sixième segments de canal (22, 23) sont formés dans la surface supérieure (16) et s'étendent à une plus grande profondeur que les segments de canal (18-21) de la grille principale.

FIG. 1

FIG. 2

FIG. 3

FIG. 4

FIG. 5

FIG. 6

FIG. 8

**FIG. 7**

**FIG. 9**

FIG. 10

FIG. 11

FIG. 12

FIG. 13

FIG. 14

FIG. 15

FIG. 16

FIG. 17

**EP 2 148 965 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1493973 A
- WO 8804713 A
- DE 20013462 U1
- NL 2008000099 W